Europäisches Patentamt

European Patent Office

Office européen des brevets

(19)

(11) Veröffentlichungsnummer: **0 213 163**
**B1**

(12) **EUROPÄISCHE PATENTSCHRIFT**

(45) Veröffentlichungstag der Patentschrift: **23.01.91**

(21) Anmeldenummer: **86901369.8**

(22) Anmeldetag: **30.01.86**

(86) Internationale Anmeldenummer:
**PCT/EP86/00039**

(87) Internationale Veröffentlichungsnummer:
**WO 86/04668 14.08.86 Gazette 86/18**

(51) Int. Cl.⁵: **F 24 F 13/00,** G 10 K 11/16,
F 16 L 55/02

(54) **SCHALLDÄMPFER-BOX.**

(30) Priorität: **07.02.85 DE 3504208**

(43) Veröffentlichungstag der Anmeldung:
**11.03.87 Patentblatt 87/11**

(45) Bekanntmachung des Hinweises auf die
Patenterteilung:
**23.01.91 Patentblatt 91/04**

(84) Benannte Vertragsstaaten:
**AT BE CH DE FR GB IT LI LU NL SE**

(56) Entgegenhaltungen:
FR-A-1 441 318
FR-A-2 300 384
FR-A-2 441 692
GB-A-2 005 384
US-A-3 834 487

(73) Patentinhaber: FRAUNHOFER-GESELLSCHAFT
ZUR FÖRDERUNG DER ANGEWANDTEN
FORSCHUNG E.V. (FhG)
Leonrodstrasse 54
D-8000 München 19 (DE)

(72) Erfinder: FUCHS, Helmut, V.
Mühlweg 39/1
D-7039 Weil (DE)
Erfinder: Ackermann, Ulrich
Mörikestr. 7
D-7039 Weil (DE)
Erfinder: RAMBAUSEK, Norbert
Bleichstrasse 5
D-7252 Weil der Stadt/Merklingen (DE)

(74) Vertreter: Kraus, Walter, Dr. et al
Patentanwälte Kraus, Weisert & Partner
Thomas-Wimmer-Ring 15
D-8000 München 22 (DE)

**Beschreibung**

Die Erfindung betrifft eine Schalldämpfer-Box gemäß dem Oberbegriff des Patentanspruchs 1.

In industriellen und haustechnischen Anlagen werden Luft, Abgase etc. durch Strömungskanäle, Behälter und Öffnungen gefördert. Derartige Strömungskanäle stellen häufig einen sehr unerwünschten Übertragungsweg für Luftschall zwischen den durch diese Strömungskanäle verbundenen Räumen dar. Insbesondere übertragen diese Strömungskanäle das von dem Strömungserzeuger, beispielsweise einem Gebläse, erzeugte Geräusch in die angeschlossenen Räume.

Eine verhältnismäßig wirksame Lärmbekämpfung kann in solchen Fällen dadurch erzielt werden, daß die Strömungskanäle mit einer schallabsorbierenden Auskleidung versehen werden. Bei Verwendung einer homogenen Auskleidung ist die dadurch erzielte Schalldämpfung dem Absorptionsgrad der Auskleidung und der Strömungskanallänge sowie dem Verhältnis zwischen dem Umfang und der Querschnittsfläche des freien Strömungskanalquerschnitts proportional. Wenn es technisch realisierbar ist, wird das Verhältnis zwischen Umfang und Querschnittsfläche des freien Strömungskanalquerschnitts durch Einbauen bzw. -stellen von zusätzlichen schallabsorbierenden Zwischenwänden in den Strömungskanal so weit wie möglich erhöht. Außerdem wird durch diese Maßnahme die effektive Strömungskanalbreite, da diese stets wesentlich kleiner als die Schallwellenlänge sein sollte, in günstiger Weise verkleinert. Der durch derartige Schalldämpferkulissen bewirkte Druckabfall muß dabei aber so gering wie irgend möglich gehalten werden, da er sonst durch eine höhere Gebläseleistung ausgeglichen werden muß, die ihrerseits eine höhere Schallemission zur Folge hat. Diese Schalldämpferkulissen dürfen also eine gewisse Dicke nicht überschreiten und sollen der Strömung möglichst wenig Widerstand bieten.

Um die Reibungsverluste, die an den Oberflächen der schallabsorbierenden Auskleidungen und der Schalldämpferkulissen auftreten, auf ein Minimum zu beschränken, wäre es wünschenswert, diese Oberflächen völlig eben, homogen und glatt, d.h. insbesondere ohne Löcher, ohne Stöße, ohne Sprünge, etc., ausführen zu können.

Wenn Ablagerungen aus den geförderten Strömungsmitteln, wie Luft, Gasen oder Dämpfen, zu befürchten sind, sollten die Schallabsorberelemente diese Ablagerungen in keiner Weise aufnehmen. Denn äußerliche Ablagerungen würden nicht nur die Reibungsverluste erhöhen, sondern sie würden bei den üblichen Schallabsorbern auch deren akustische Wirksamkeit beträchtlich verschlechtern. Nocht wichtiger ist es aber, das Eindringen von Stoffen aus dem geförderten Strömungsmittel in das Innere der Schallabsorber zu verhindern, da diese eindringenden Stoffe sich dann ansammeln, und damit die Wirkungsweise der Schallabsorber ungünstig verändern, chemisch reagieren oder in anderer Weise zu ungünstigen Wechselwirkungen führen. Ein solches Eindringen von Stoffen sollte unter allen Umständen vermieden werden. Aus diesen Gründen sowie aus anderen wichtigen sicherheitstechnischen Gründen, wie beispielsweise aus Brandschutzgründen, aus Gründen des hygienischen Schutzes etc., bezüglich der Strömungsmittelkanäle und bezüglich der daran angeschlossenen Räume ist ein rundum hermetischer, insbesondere gas- und wasserdichter, Abschluß der schallabsorbierenden Auskleidungen und Kulissen wünschenswert.

Um eine hohe Standzeit und eine dauerhafte "Versiegelung" der Kulissen-Schalldämpfer zu erreichen, sollte mindestens ihre äußere Schale bzw. Haut chemisch und mechanisch möglichst resistent sein.

Damit die Kulissen-Schalldämpfer nicht als empfindliche Fremdkörper im Strom des geförderten Strömungsmittels in den Strömungskanälen stehen, sondern sich möglichst harmonisch in die Konstruktion der gesamten Strömungsmittelförderanlage einfügen lassen, sollten die Materialien für die Schalldämpfer-Kulissen, weitgehend an die Materialien der Strömungskanalwände angepaßt sein. Insbesondere würde ein Aufbau aus Metallblechen in vieler Hinsicht Vorteils bieten.

Schließlich sollten die Schalldämpfer-Kulissen in sich so stabil aufgebaut sein, daß sie auch einen längeren Transport vom Hersteller zum Anwender unter rauhen Bedingungen unbeschädigt überstehen und im Einbauzustand auch eventuellen Belastungen durch die Strömung und durch Erschüterungen der Strömungsmittelförderanlage dauerhaft standhalten. Dabei sollte ihr Gewicht aber im Hinblick auf Montage und Statik möglichst gering sein.

In vieler Hinsicht würden daher Schalldämpfer-Konstruktionen besonders vorteilhaft sein, bei denen schallabsorbierendes Material nicht in einem wie auch immer stabil aufgebauten Kulissen-Rahmen untergebracht ist und zusätzlich noch gehalten sowie gegen Beschädigungen und gegenüber dem geförderten Strömungsmittelstrom gestützt werden muß, sondern bei denen die schallabsorbierenden Bauteile einzeln oder im Verbund gleichzeitig tragende und versteifende Funktionen übernehmen können, d.h. es wäre vorteilhaft, wenn die tragenden Bauteile des Schalldämpfer-Kulisse gleichzeitig zur Schallabsorption herangezogen werden könnten.

Herkömmliche Schalldämpfer erfüllen alle diese Forderungen auch nicht annähernd.

Hinzu kommt ein besonders für Lüftungsanlagen typischer Umstand, der im Hinblick auf den Schallabsorptionsbereich besonders wichtig ist. Dieser Umstand besteht darin, daß zwar hohe und mittlere Frequenzen in längeren Strömungskanälen auch ohne oder mit sehr einfachen schallabsorbierenden Maßnahmen an den Strömungskanalwänden gedämpft werden können, daß jedoch tiefe Frequenzen unter 500 Hz oft Schwierigkeiten bereiten. Hinzu kommt noch, daß das Gebläselärm-Spektrum typischerweise eine bereits am Ort der Schallemission mit der Frequenz fallende Charakteristik aufweist. Ähnlich verhält es sich ganz generell mit den aerodynamisch im Strömungskanal erzeugten Geräuschen, die ebenfalls weitgehend tieffrequent sind. Auch wenn man die dem Ohr angepaßte A-Bewertung durchführt, bleiben sehr häufig Frequenzanteile um 250 Hz am Schallimissionsort dominant.

Man sollte eigentlich erwarten, daß unter diesen Umständen bevorzugt auf tiefe Frequenzen abgestimmte Schalldämpfer eingesetzt würden. Tatsächlich findet man aber ganz überwiegend Schalldämpfer im Einsatz, die ihre größte Wirksamkeit erst weit oberhalb des dominierenden Frequenzbereichs entfalten. Als Begründung wird häufig angegebn, daß diese aus porösen oder faserigen Materialien aufgebauten Schallabsorber konstruktiv einfach, vielfach bewährt und sicher auslegbar seien. Obgleich die Bedämpfung der tiefen Frequenzen mit porösen Schallabsorbern nur mit sehr dicken Schalldämpfer-Kulissen möglich ist, nimmt man in der Praxis die dadurch gegebenen Nachteile in Kauf, insbesondere den Nachteil eines wegen des großen Bauvolumens unnötig hohen Druckverlustes.

Nach dem Stande der Technik werden Schalldämpfer im allgemeinen für eine universelle Anwendung zur Lärmbekämpfung verschiedenster Geräuschquellen mit sehr unterschiedlicher Schallfrequenzzusammensetzung konzipiert. Für solche, nicht auf bestimmte Geräuschspektren zugeschnittene Anwendungen wird nach dem Stande der Technik eine Auskleidung angestrebt, die in einem möglichst breiten Frequenzbereich eine möglichst hohe und konstante Schalldämpfung gewährleistet. Es gibt aber, wie weiter oben bereits dargelegt, einen großen Anwendungsbereich, insbesondere auf dem Gebiet der Lüftungstechnik, in dem konventionelle Schallabsorber weit ab vom Frequenzbereich ihrer maximalen Wirksamkeit praktisch am äußersten Rand ihres Wirkungsbereichs eingesetzt werden. Das hat dazu geführt, daß Schalldämpfer für diese Anwendungen in geradezu widersinniger Weise nicht nach ihrem Dämpfungsmaximum, sondern stattdessen überhaupt nur nach ihrer Dämpfung bei der Frequenz von 250 Hz beurteilt und ausgelegt bzw. ausgesucht werden.

Ein schallabsorbierendes Bauelement, das ohne Einsatz von porösem Schallabsorptionsmaterial aufgebaut ist, ist in der nichtvorveröffentlichten DE—A—34 12 432 der Fraunhofer-Gesellschaft vorgeschlagen worden. Dieses schallabsorbierende Bauelement besteht aus einzelnen doppelbecherförmigen Schallabsorptionselementen, die zwei ineinander gefügte Becherelemente aufweisen, wobei die Becheröffnung des inneren Becherelements durch eine, vorzugsweise ebene, Folie abgedeckt, insbesondere im wesentlichen schalldicht abgeschlossen ist. Zwischen den Seitenwänden der beiden ineinandergefügten Becherelemente ist ein Spalt ausgebildet, der eine schallabsorbierende Luft- oder Gasschicht für die im Hörfrequenzbereich liegenden Biegeschwingungen der Seitenwände des äußeren und/oder inneren Becherelements bildet; und/oder das innere Becherelement besitzt eine kleinere Becherhöhe als das äußere Becherelement, und im Becherboden des inneren Becherelements ist eine halsförmige Durchgangsöffnung vorgesehen, deren Querschnittsfläche und Länge derart bemessen sind, daß die Resonanzfrequenz des von der halsförmigen Durchgangsöffnungen, dem Volumen des inneren Becherelements sowie dem vom äußeren Becherelement und dem Boden des inneren Becherelements begrenzten Volumen gebildeten Helmholtzresonators im Hörfrequenzbereich liegt. Dieses schallabsorbierende Bauelement kombiniert zwar einen breitbandigen Schallabsorptionsbereich mit einem speziell auf tiefere Frequenzen, wie den Schaufelton eines Gebläses, besonders abstimmbaren Schallabsorptionsbereich, so daß es durchaus zur Dämpfung von sich in Strömungsmittelförderkanälen, wie beispielsweise Lüftungskanälen, im Strömungsmittel ausbreitenden Schallwellen geeignet erscheint, es besitzt jedoch einen verhältnismäßig komplizierten Aufbau, so daß es aus Kostengründen nicht an allen Stellen, wo es gebraucht werden könnte, eingesetzt werden kann, und es hat darüberhinaus nicht völlig glatte Begrenzungsflächen, so daß es auch im Hinblick auf eventuelle Ablagerungen von Stoffen aus dem Strömungsmittel nur in beschränktem Ausmaß einsetzbar ist.

Außerdem ist aus GB—A—2 005 384 eine Schalldämpfer-Box der im Oberbegriff des Patentanspruchs 1 angegebenen Art bekannt. Bei dieser Schalldämpfer-Box ist die Außenplatte starr und perforiert, und auch die Innenplatte ist eine starre Platte, so daß sich insgesamt eine starre Struktur ergibt, in der nur das Fluid, z.B. Luft, schwingt. Hierbei dient die perforierte Außenplatte ausschließlich dazu, die verhältnismäßig großen Durchgangslöcher der Innenplatte strömungsmäßig relativ "glatt" abzudecken. Diese Schalldämpfer-Box gemäß GB—A—2 005 384 hat infolgedessen nur eine scharfe Resonanzfrequenz und erbringt damit nur eine schmalbandige Schallabsorption.

Weiterhin ist aus FR—A—1 441 318 ein Schallabsorber bekannt, der im wesentlichen aus einer geschlossenen Kammer besteht, die auf einer Seite von einer schwingungsfähigen, impermeablen Membran begrenzt ist, der gegenüber im Inneren der Kammer eine poröse Materialschicht angeordnet ist, die von der Membran durch eine Luftkammer abgetrennt ist. Die Schallabsorption erfolgt hier durch Plattenschwingungen der Membran, die als Masse vor der Luftkammer, welche eine Feder bildet, zu einfachen Schwingungen anregbar ist. Auch hier ist infolgedessen nur eine schmalbandige Schallabsorption gegeben, auch wenn mittels Gewichten, die auf der Membran angebracht werden können, eine Abstimmung zu niedrigeren Frequenzen möglich ist.

Aufgabe der Erfindung ist es demgegenüber, ausgehend von einem schallabsorbierenden Bauelement der Art, wie es in der vorerwähnten DE—A—34 12 432 der Fraunhofer-Gesellschaft beschrieben und dargestellt ist, dieses so auszubilden, daß es möglichst sehr einfach aufgebaut ist, praktisch keine Ablagerungen aus Strömungsmitteln zuläßt, nur geringe Druckverluste in den Strömungsmittelkanälen, in denen es eingebaut wird, verursacht, in hohem Maße gegen Brandgefahr sicher ist, alle hygienischen Gefahren ausschaltet, gute Widerstandsfähigkeit gegen mechanische und chemische Belastungen und Angriffe besitzt, eine hohe mechanische Stabilität aufweist, sowie ein geringes Gewicht und einen verhältnismäßig kleinen Raumbedarf hat. Im übrigen soll der durch die Erfindung zur Verfügung zu stellende Kulissen-Schalldämpfer, der nachstehend als Schalldämpfer-Box bezeichnet wird, alle oder zumindest möglichst viele der vorstehend in der Einleitung sowie bezüglich des Standes der Technik und im Zusammenhang mit dem schallabsorbierenden Bauelement nach der nichtvorveröffentlichten Anmeldung P 34 12 432.2 der Fraunhofer-Gesellschaft erörterten Anforderungen erfüllen bzw. deren Nachteile ausschalten, insbesondere soll er diese Forderungen besser als die vorherrschenden porösen Schallabsorber erfüllen und die Nachteile anderer bekannter Schallabsorberbauarten vermeiden.

Diese Aufgabe wird erfindungsgemäß durch die im Kennzeichen des Patentanspruchs 1 angegebenen Merkmale gelöst.

Durch die Zwangskopplung und dadurch, daß die Außen- und Innenplatte, der Helmholtzresonator und die Luft oder das Gas in den beiden Tielhohlräumen und im Durchgangsloch ein zusammenhängendes Schwingungssystem bilden, was weiter unten im Figurenbeschreibungsteil näher erläutert ist und einen entscheidenden Schritt über die nichtvorveröffentlichte DE—A—34 12 432 der Fraunhofer-Gesellschaft hinaus darstellt, wird nicht nur eine wesentliche Verbreiterung des besonders wirksamen Schallabsorptionsfrequenzbereichs der erfindungsgemäßen Schalldämpfer-Box erzielt, sondern sie ermöglicht es gegenüber der DE—A—34 12 432, die einzelnen diskreten doppelbecherförmigen schallabsorbierenden Bauelementen, bei denen die Becherböden der äußeren Becherelemente in ihren Eigenschwingungen auf den in Frage kommenden Schallabsorptionsbereich abgestimmt sind, bei verbesserter Schallabsorptionsfähigkeit sowohl im tiefen Frequenzbereich als auch im gesamten Frequenzbereich, durch eine integrierte Gesamtstruktur zu ersetzen, die völlig ebene, homogene und glatte Außenfläche besitzt.

Das wird durch eine Schalldämpfer-Box mit einer Mehrzahl von nebeneinander angeordneten Kammern des vorstehenden grundsätzlichen erfindungsgemäßen Aufbaus erreicht, die sich in Weiterbildung der Erfindung dadurch auszeichnet, daß die Außenplatten mehrerer seitlich benachbarter Kammern, vorzugsweise aller seitlich benachbarten Kammern, von einer gemeinsamen, einstückigen Abdeckplatte gebildet sind.

Die vorerwähnte Zwangskopplung bewirkt nämlich, daß die einzelnen Bereiche der gemeinsamen, einstückigen Abdeckplatte, die über den Durchgangslöchern der Innenplatten und deren Umgebung liegen, ähnlich wie gesonderte Abdeckplatten in einer Vielzahl von Frequenzen schwingen, so daß bei diesen Frequenzen eine entsprechende Schallabsorption stattfindet, wobei durch die Wirkung des Helmholtzresonators in Verbindung mit dieser Zwangskopplung eine besonders gute Schallabsorption im tieffrequenten Bereich, d.h. zwischen 100 und 500 Hz, stattfindet.

Hierbei ist es nicht erforderlich, die gemeinsame, einstückige Abdeckplatte an den seitlichen Kammerwänden jeder einzelnen Kammer zu befestigen, vielmehr brauchen diese seitlichen Kammerwände in äußerst vorteilhafter Weise nur bis zu der Innenplatte zu reichen. Das ermöglicht es, die erfindungsgemäße Schalldämpfer-Box in einer besonders bevorzugten Ausführungsform, die eine Mehrzahl von nebeneinander angeordneten Kammern aufweist, in Weiterbildung der Erfindung so auszubilden, daß die Innenplatten mehrerer seitlich benachbarter Kammern, vorzugsweise aller seitlich benachbarten Kammern, von einer gemeinsamen, einstückigen Lochplatte gebildet sind.

Eine besonders hohe Effektivität und Raumausnutzung kann bei der Schalldämpfer-Box nach der Erfindung dadurch erzielt werden, daß zwei Anordnungen aus je einer Mehrzahl von nebeneinanderliegenden Kammern zu einer Doppelschichtanordnung zusammengefaßt sind, in der die Kammern der beiden Anordnungen von nebeneinanderliegenden Kammern an ihren Rückseiten miteinander verbunden sind.

Die seitlich benachbarten Kammern können gemeinsame Seitenwände aufweisen, so daß also die eine Fläche einer solchen Seitenwand die eine benachbarte Kammer und die andere Fläche dieser Seitenwand die andere benachbarte Kammer teilweise begrenzt.

In entsprechender Weise können die Kammern, deren Rückseiten einander benachbart sind, jeweils einen gemeinsamen Kammerboden haben, so daß also die Kammerböden bei der vorstehend erwähnten Doppelschichtanordnung von einer gemeinsamen Platte gebildet werden können, auf der die beiden Schichten von seitlich benachbarten Kammern Rücken-an-Rücken angeordnet sind.

Eine noch weitergehende bauliche Vereinfachung wird dadurch erreicht, daß die gemeinsamen Seitenwände von einer wabenförmigen Skelettstruktur gebildet sind. Die wabenförmige Skelettstruktur kann darüberhinaus außerdem so ausgebildet sein, daß auch die gemeinsamen Kammerböden von der wabenförmigen Skelettstruktur gebildet sind.

Eine besonders strömungsmäßig glatte und vorteilhafte Ausführungsform ergibt sich, wenn gemäß einer Weiterbildung der vorgenannten erfindungsgemäßen Bauweisen der Schalldämpfer-Box die Mehrzahl von Kammern von einem gemeinsamen Kulissen-Rahmen eingefaßt und durch diesen sowie die Abdeckplatte oder -platten strömungsmitteldicht gegenüber der Umgebung abgeschlossen ist.

Im Hinblick auf die vorstehend angegebenen Forderungen nach strömungsgünstiger Ausführung der Außenhaut der Schalldämpfer-Box ist es zu bevorzugen, daß die Abdeckplatte eine völlig ebene und glatte, sowie vorzugsweise metallische, Außenoberfläche hat.

Besonders gut herstellbare und stabile Strukturen lassen sich in Verbindung mit anderen Vorteilen, auf die weiter unten näher eingegangen wird, dadurch erzielen, daß bei einer bevorzugten Ausführungsform der erfindungsgemäßen Schalldämpfer-Box alle genannten Teile der Schalldämpfer-Box aus dem gleichen Material, insbesondere einem Kunststoff oder Metall, vorzugsweise aus Aluminium oder einer Aluminiumlegierung, bestehen.

Weiter ist es zu bevorzugen, daß die Dicke der Außenplatten und der Innenplatten größenordnungsmäßig gleich und vorzugsweise kleiner als der Abstand zwischen den Außenplatten und den Innenplatten ist, um eine gute Schallabsorptionsfähigkeit zu erzielen.

Schließlich läßt sich der Verlauf der Schallabsorptionsfähigkeit der erfindungsgemäßen Schalldämpfer-Box in Abhängigkeit von der Frequenz dadurch in gewissen gewünschten Grenzen verändern, daß das Durchgangsloch einen von der Außenplatte weggerichteten Hals aufweist, der einen Strömungskanal bildet.

Die vorstehende sowie weitere Vorteile der Erfindung seien nachfolgend unter Bezugnahme auf die Figuren der Zeichnung anhand einiger besonders bevorzugter Ausführungsformen einer erfindungsgemäßen Schalldämpfer-Box sowie anhand von Vergleichsversuchen näher erläutert; es zeigen:

Figur 1 einen Längsschnitt durch eine besonders bevorzugte Ausführungsform einer erfindungsgemäßen Schalldämpfer-Box;

Figur 1A einen Schnitt durch eine Funktions- bzw. Teileinheit einer Schalldämpfer-Box;

Figuren 1B bis 1D perspektivische Darstellungen einer Schalldämpfer-Box der in den Figuren 1 bis 3 gezeigten Art, wobei aus Darstellungsgründen Teile weggebrochen und/oder weggeschnitten sind;

Figur 2 eine Aufsicht auf die in Figur 1 dargestellte Schalldämpfer-Box von oben oder unten, da beide Aufsichten gleich aussehen, wobei in gestrichelten Linien einige Durchgangslöcher in der in Figur 2 verdeckten Lochplatte sowie die Seitenwände der einzelnen Kammern der Schalldämpfer-Box angedeutet sind;

Figur 3 einen Querschnitt durch die Schalldämpfer-Box nach den Figuren 1 und 2;

Figur 4A eine Kurvendarstellung, in welcher die mit einerm Ausführungsbeispiel einer erfindungsgemäßen Schalldämpfer-Box-Anordnung erzielte Dämpfung in Abhängigkeit von der Frequenz wiedergegeben ist;

Figur 4B die Schalldämpfer-Box-Anordnung, aufgrund welcher die Dämpfungskurve der Figur 4A gemessen werden ist, und zwar im Querschnitt einschließlich des Strömungskanals, in dem diese Schalldämpfer-Box-Anordnung vorgesehen war;

Figur 5A eine der Figur 4A entsprechende Dämpfungskurve, wobei jedoch die Lochplatten der dieser Dämpfungskurve zugrundeliegenden Ausführungsformen von erfindungsgemäßen Schalldämpfer-Boxen mit Hälsen versehen waren, welche die Löcher der Lochplatte strömungskanalartig verlängerten und von der Abdeckplatte weggerichtet waren;

Figur 5B Schalldämpfer-Box-Anordnungen und Ausbildungen, aufgrund deren die Meßergebnisse der Figur 5A erhalten wurden;

Figur 6A eine Kurvendarstellung, welche die Dämpfung in Abhängigkeit von der Frequenz von porösen Schallabsorbern angeben, die in gleicher Weise und in den gleichen Abmessungen wie die erfindungsgemäßen Schallabsorber gemäß den Figuren 4B und 5B angeordnet waren, wobei Kurve a einen porösen Schallabsorber in Normalausführung und Kurve b einen porösen Schallabsorber betrifft, der zur Hälfte mit 0,5 mm dickem Blech auf gegenüberliegenden Seiten abgedeckt ist;

Figur 6B eine den Figuren 4B und 5B entsprechende Darstellung der Anordnung der porösen Schallabsorber, aufgrund derer die Dämpfungskurven gemäß Figur 6A gemessen worden sind;

Figur 7A eine Kuvendarstellung, welche die Dämpfung von Plattenabsorbern in Abhängigkeit von der Frequenz wiedergibt;

Figur 7B eine Darstellung der Anordnung und Ausbildung dieser Plattenabsorber in einer den Figuren 4B, 5B und 6B entsprechenden Darstellungsweise;

Figur 8A zwei Kurvendarstellungen, welche die Dämpfung von Helmholtzresonatoren mit freien Löchern und mit zugeklebten Löchern in Abhängigkeit von der Frequenz wiedergeben;

Figur 8B eine Darstellung der Anordnung und Ausbildung der Helmholtzresonatoren, aufgrund derer die Dämpfungskurven nach Figur 8A aufgenommen worden sind in einer Darstellungsweise, die den Figuren 4B, 5B, 6B und 7B entspricht; und

Figur 9 einen schematischen Schnitt durch eine Lochplatte und eine Abdeckplatte im Bereich eines Durchgangslochs einer erfindungsgemäßen Schalldämpfer-Box zur Erläuterung der Wirkungsweise dieser Schalldämpfer-Box.

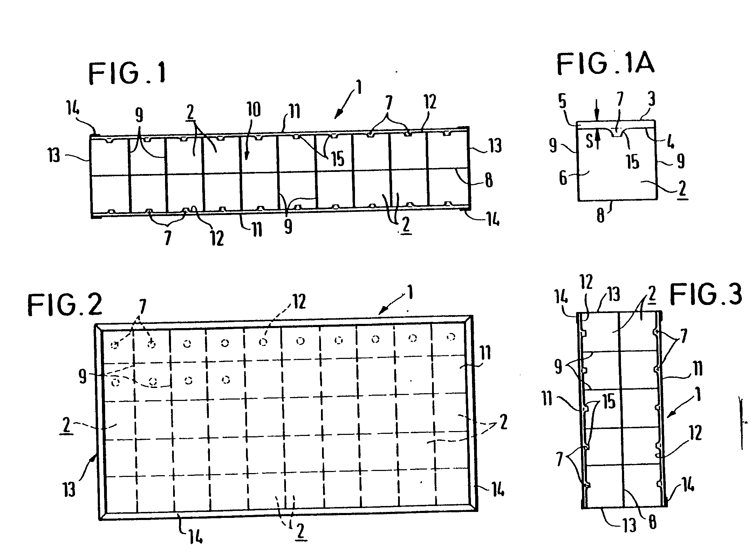

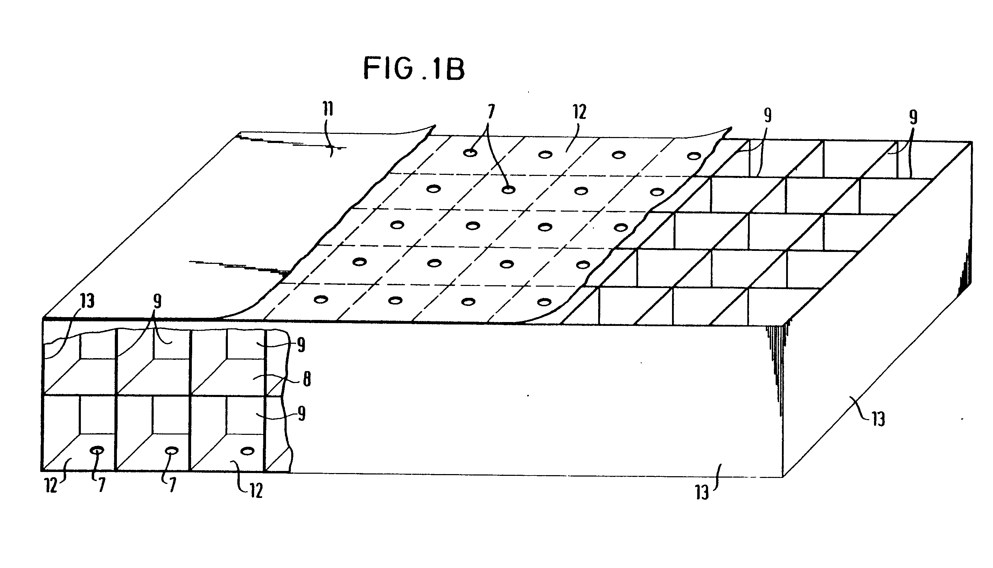

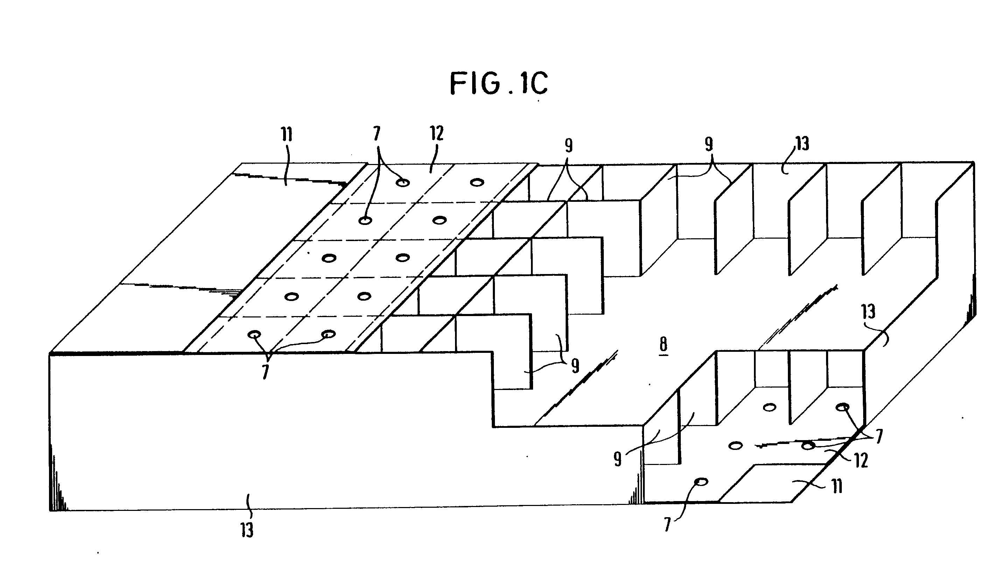

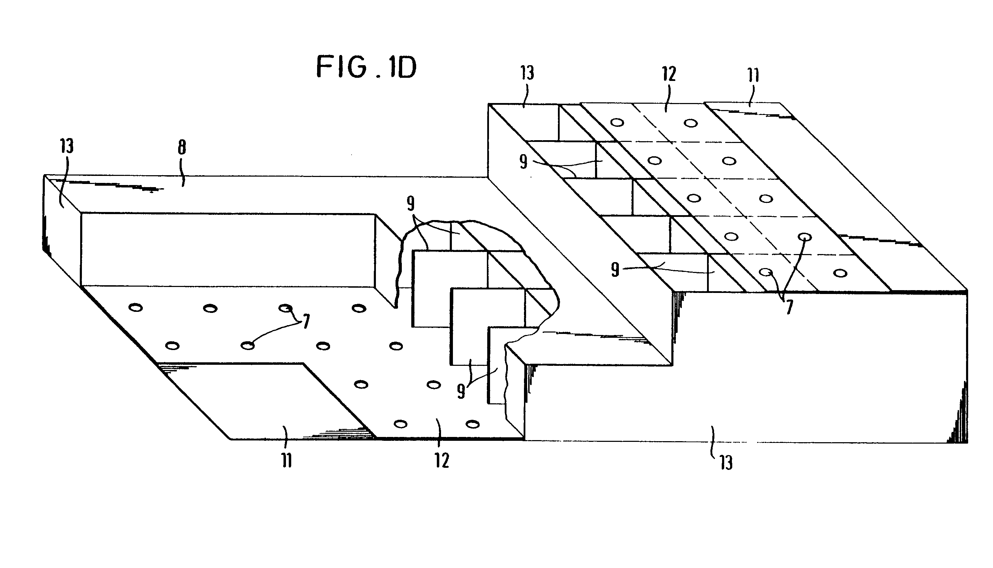

Es sei nun zunächst unter Bezugnahme auf die Figuren 1 bis 3 der Aufbau einer besonders bevorzugten Ausführungsform einer erfindungsgemäßen Schalldämpfer-Box erläutert, wobei zunächst unter Bezugnahme auf die Figur 1A eines der Funktions- bzw. Teilelements erläutert sei, aus denen die in den Figuren 1, 2 und 3 dargestellte Schalldämpfer-Box in Vielfachanordnung im wesentlichen besteht, wobei Abwandlungen dieser Schalldämpfer-Box gemäß den Figuren 1, 2 und 3 in Verbindung mit ihrer ins einzelne gehenden Beschreibung weiter unten näher erläutert sind.

Das in der Figur 1A dargestellte Funktions- bzw. Teilelement einer Schalldämpfer-Box umfaßt eine in sich abgeschlossene Kammer 2, die einen Hohlraum bildet. Diese Kammer 2 ist auf einer Seite durch eine zu Schwingungen im Hörfrequenzbereich anregbare Außenplatte 3 begrenzt.

Außerdem umfaßt das Funktions- bzw. Teilelement eine Innenplatte 4, die im wesentlichen parallel zu der Außenplatte 3 im Hohlraum der Kammer 2 angeordnet ist und diesen in zwei Teilhohlräume 5 und 6 unterteilt. Diese Teilhohlräume 5 und 6 sind nur durch ein in der Innenplatte 4 vorgesehenes Durchgangsloch 7 miteinander verbunden. Dieses Durchgangsloch 7 bildet zusammen mit dem Teilhohlraum 6, also dem von der Außenplatte 3 entfernten Teilhohlraum, einen auf Schwingungen im Hörfrequenzbereich abgestimmten Helmholtzresonator.

Zwischen der Außenplatte 3 und der Innenplatte 4 ist nun ein derart geringer Abstand S vorgesehen, daß die Schwingungen der Außenplatte und des Helmholtzresonators durch Luft- oder Gasströmungen, welche von Schwingungen der Außenplatte 3, der Innenplatte 4 sowie des Helmholtzresonators in dem Zwischenraum zwischen der Außenplatte 3 und der Innenplatte 4 sowie in dem Durchgangsloch 7 induziert werden, miteinander zwangsgekoppelt sind.

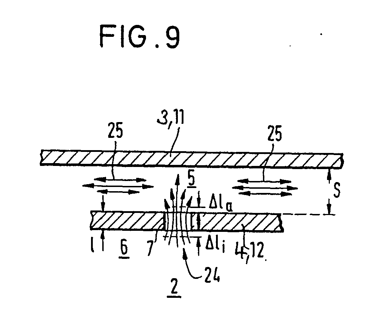

Diese Luft- oder Gasströmungen sind in Figur 9 angedeutet, und ihre zwangskoppelnde Wirkung bei dem geringen Abstand S ist weiter unten im Zusammenhang mit der Figur 9 näher erläutert.

Es sei nun näher auf die Figuren 1, 2 und 3 eingegangen, die, wie bereits erwähnt, eine Schalldämpfer-Box 1 zeigen, welche aus einer Vielzahl von Funktions- bzw. Teilelementen der im Prinzip in Figur 1A dargestellten Art zusmamengesetzt ist:

Die in der Schalldämpfer-Box vorgesehenen Kammern 2 bilden zwei Anordnungen aus je einer Mehrzahl von nebeneinanderliegenden Kammern 2, die zu einer Doppelschichtanordnung zusammengefaßt sind. Die eine Schicht dieser Doppelschichtanordnung ist in Figur 1 die obere Schicht von nebeneinanderliegenden Kammern 2, während die andere Schicht dieser Doppelschichtanordnung in Figur 1 die untere schicht von nebeneinander angeordneten Kammern 2 ist. Die Kammern der beiden Anordnungen bzw. Schichten von nebeneinanderliegenden Kammern 2 sind an ihren Rückseiten miteinander verbunden, und zwar in der vorliegenden Ausführungsform derart, daß die Kammern 2, deren Rückseiten einander benachbart sind, jeweils einen gemeinsamen Kammerboden haben, der von einer durchgehenden, ebenen Bodenplatte 8 gebildet wird.

Außerdem haben die nebeneinander angeordneten Kammern 2 gemeinsame Seitenwände 9.

Die Bodenplatte 8 und die Seitenwände 9 sind in der besonders bevorzugten Ausführungsform nach den Figuren 1, 2 und 3 von einer wabenförmigen, in sich starren Skelettstruktur 10 gebildet, die beispielsweise aus Blechteilen zusammengesteckt, -geklebt oder -geschweißt werden, also integral sein kann.

Besonders wichtig ist es nun, daß die Außenplatten 3 aller einander seitlich benachbarten Kammern 2 von einer gemeinsamen, einstückigen Abdeckplatte 11 gebildet sind, und daß weiterhin die Innenplatten 4 aller einander seitlich benachbarten Kammern von einer gemeinsamen, einstückigen Lochplatte 12 gebildet sind.

Die Vielzahl von Kammern 2 der Schalldämpfer-Box 1 ist von einen gemeinsamen Kulissen-Rahmen 13 eingefaßt, der mittels Umkantungen 14 die Ränder der Abdeckplatten 11 und der Lochplatten 12 übergreift und an diesen Umkantungen 14 dicht mit den Abdeckplatten 11 verbunden ist. Auf diese Weise ist das Innere der Schalldämpfer-Box 1 durch die Abdeckplatten 11 und den Kulissen-Rahmen 13 strömungsmitteldicht gegenüber der Umgebung abgeschlossen.

Die Abdeckplatte 11 hat vorzugsweise eine völlig ebene und glatte, sowie besonders bevorzugt eine metallische, Außenoberfläche.

Außerdem können die Durchgangslöcher 7 mit einem von der Außenplatte 3 bzw. der Abdeckplatte 11 weggewandten Hals 15 versehen sein, der einen Strömungskanal bildet.

Alle genannten Teile, nämlich insbesondere die Außenplatte 3 und die Innenplatte 4 bzw. die Abdeckplatte 11 und die Lochplatte 12 sowie die Skelettstruktur 10 und der Kulissen-Rahmen 13 können aus dem gleichen Material, insbesondere einem Kunststoff oder Metall hergestellt sein, wodurch Schwierigkeiten durch unterschiedliche Wärmeausdehnungen und unterschiedlich elektrische Potenziale vermieden werden. Vorzugsweise können sie aus Aluminium oder einer Aluminiumlegierung bestehen. Die Dicke der Außenplatten 3 bzw. der Abdeckplatte 11 und die Dicke der Innenplatten 4 bzw. der Lochplatte 12 ist bevorzugt größenordnungsmäßig gleich. Außerdem ist diese Dicke vorzugsweise kleiner als der Abstand S zwischen den Außenplatten bzw. der Abdeckplatte und den Innenplatten bzw. der Lochplatte.

Die Innen- bzw. Lochplatten 4, 12 sind vorzugsweise derart bemessen, daß sie im Hörfrequenzbereich zu Schwingungen anregbar sind, so daß sie dadurch in Verbindung mit den angekoppelten Hohlraumresonatoren einen Beitrag zur Gesamtschallabsorption erbringen.

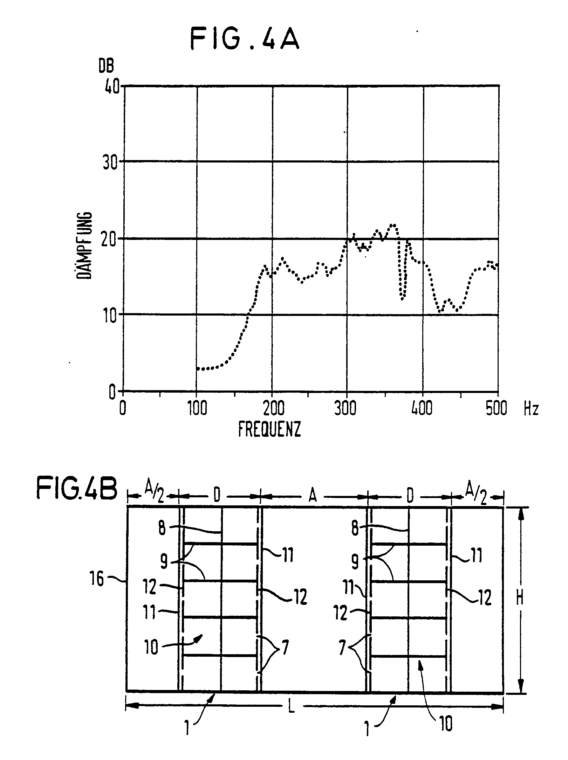

Wie die Figuren 1 und 3 zeigen, sind zwar die Teilhohlräume der Kammern 2, welche sich zwischen der Lochplatte 12 und der Bodenplatte 8 befinden, durch die Seitenwände 9 voneinander abgetrennt, jedoch sind diejenigen Teilhohlräume der Kammern 2, die sich zwischen der Abdeckplatte 11 und der Lochplatte 12 befinden, nicht notwendigerweise voneinander getrennt, so daß sich dadurch ein sehr einfacher Aufbau ergibt, wobei die Abdeckplatte 11 und die Lochplatte 12 gegebenenfalls durch einzelne Abstandsteile, -vorsprünge o.dgl., die sich vorzugsweise im Bereich der gedachten Verlängerungen der Seitenwänden 9 nach der Abdeckplatte 11 zu befinden, im Abstand voneinander gehalten werden können.

Die neuartige Schalldämpfer-Box, die für den Einsatz in Strömungskanälen besonders gut geeignet ist, erfüllt die weiter oben allgemein und im Rahmen der Aufgabe der Erfindung angegebenen Forderungen in geradezu idealer Weise:

Völlig glatte Abdeckplatten 11 auf beiden Seiten des Kulissen-Rahmens 13, der ebenfalls völlig glatt ausgeführt sein kann, garantieren einen kleinstmöglichen Wandreibungswiderstand und damit einen gegenüber herkömmlichen Schalldämpfer-Kulissen auf ein absolutes Minimum reduzierbaren

EP 0 213 163 B1

Druckverlust. Sie machen Ablagerungen aus dem Strömungsmittel praktisch unmöglich. Unter extrem schmutzigen Einsatzbedingungen, wie sie zum Beispiel in Abgaskanälen vorkommen können, ist eine äußerst leichte Reinigung durch Abwaschen, Abspritzen oder Tauchen der ganzen Schalldämpfer-Boxen möglich.

Wenn man, was zu bevorzugen ist, den Kulissen-Rahmen 13 sowie alle unterteilenden und versteifenden Seitenwände 9 und Bodenplatten 8, die vorzugsweise einstückig miteinander hergestellt sind, sowie die Lochplatten 12 und die Abdeckplatten 11 aus Metall herstellt, lassen sich alle nur denkbaren Auflagen hinsichtlich des Brandschutzes erfüllen. Ebenso lassen sich auf diese Weise alle möglichen Hygieneanorderungen leicht erfüllen. Wenn die Abdeckplatten 11 unmittelbar, insbesondere nur wenige Millimeter oder zehntel Millimeter, vor den Lochplatten 12 angeordnet sind, genügt bereits eine relativ kleine Wandstärke, um eine außerordentlich große Widerstandfähigkeit gegenüber mechanischen Beschädigungen der im wesentlichen von den Abdeckplatten 11 gebildeten Außenhaut zu erreichen. Gegen chemische Beanspruchungen und Korrosion läßt sich die Außenhaut, also die äußere Oberfläche der Abdeckplatten 11 und des Kulissen-Rahmens 13 ganz ähnlich schützen wie die übrigen Wände eines Strömungskanals. Die hier vorgeschlagene Schalldämpfer-Box fügt sich also problemlos in eine Lüftungs- oder Strömungsmittelförderanlage ein, ohne daß damit irgendwelche unverträglichen oder empfindlichen Materialien in diese Anlage hineingetragen werden, die etwa bei Beschädigung des Schalldämpfers von dem Strömungsmittel mitgenommen werden könnten.

Der für herkömmliche Schallabsorber ganz undenkbare skelettartige Aufbau durch die Skelettstruktur 10 gibt der Schalldämpfer-Box 1 bei minimaler Materialstärke ein Höchstmaß an Stabilität hinsichtlich Druck-, Schiebe- und Verdrehbeanspruchungen. Der von herkömmlichen Schalldämpfer-Kulissen übernommene Kulissen-Rahmen 13 mit einem üblicherweise umlaufenden Falz, der hier als Umkantung 14 bezeichnet ist und beispielsweise eine Breite von 1 bis 5 cm, vorzugsweise 2 cm, haben kann, läßt alle Montageflächen unverändert. Die hier vorgeschlagenen Schalldämpfer-Boxen lassen sich ebenso wie alle konventionell aufgebauten Kulissen leicht transportieren, stapeln und montieren, sind also trotz ihrer erheblichen Vorteile gegenüber diesen herkömmlich aufgebauten Kulissen keineswegs schwieriger zu transportieren, zu stapeln und zu montieren. Wenn die vorgeschlagene Schalldämpfer-Box, was zu bevorzugen ist, homogen aus einem und demselben Material aufgebaut ist, verhält sie sich auch bei größeren Temperaturänderungen völlig unkritisch. Selbst Vereisungen der glatten Außenhaut haben keine wesentlichen Beeinträchtigungen ihrer Schalldämpfungswirksamkeit zur Folge.

Da zwischen bzw. innerhalb der Skelettstruktur 10, also dem, vorzugsweise einstückigen, Aufbau aus der Bodenplatte 8 und den Seitenwänden 9, nur Kammern 2 bildende Hohlräume verbleiben, die keinesfalls mit irgendwelchem porösem oder faserigem Material ausgefüllt werden müssen, kann das Gewicht der hier vorgeschlagenen Schalldämpfer-Box ganz beträchtlich unter dem Gewicht von konventionellen Schalldämpfer-Kulissen bleiben, die zum Beispiel mit Mineralwolle gefüllt sind.

Während für konventionelle Schallabsorber gilt, daß sie nicht mehr wirken können, wenn ihre Breite bzw. Tiefe sehr klein gegenüber der Schallwellenlänge wird, gilt dagegen diese untere Frequenzgrenze für die hier vorgeschlagene Schalldämpfer-Box nicht, so daß man bei gleichem Raumbedarf Schalldämpfer-Boxen nach dem hier vorgeschlagenen neuartigen Prinzip für viel niedrigere Frequenzen auslegen kann.

Die in Figur 4A dargestellte Dämpfungskurve, die durch schmalbandige Messungen der Dämpfung von Schalldämpfer-Boxen der in den Figuren 1 bis 3 gezeigten Art ermittelt worden ist, zeigt eine nach herkömmlichen Vorstellungen ganz unerwartet hohe Schalldämpfung in einem überraschend breiten Frequenzbereich zwischen 150 und 500 Hz von im Mittel 15 dB für Schalldämpfer-Boxen von 1 m Länge bei einem Ausstellungsverhältnis D/H (siehe Figur 4B, in der diese Größen eingezeichnet sind) von nur 0,7. Hierbei ist zu beachten, daß die Dämpfungscharakteristik der Figur 4A ein willkürlich herausgegriffenes Beispiel darstellt und noch in keiner Weise optimiert ist. Sie läßt sich durch Wahl allein der geometrischen Parameter der Kammern 2 auf nahezu beliebige Geräuschspektren im unteren und mittleren Frequenzbereich abstimmen. Im einzelnen liegen den Figuren 4A und 4B folgende Daten der Schalldämpfer-Boxen 1 und ihrer Anordnung in dem Strömungskanal 16 zugrunde:

| | |
|---|---|
| Bodenplatte 8 und Seitenwände 9 der Skelettstruktur 11: | Aluminiumblech von 0,2 mm Dicke |
| Lochplatte 12: | Aluminiumblech von 0,1 mm Dicke |
| Abdeckplatte 11: | Aluminiumblech von 0,1 mm Dicke, unmittelbar vor der Lochplatte 12 angebracht |
| Tiefe der Kammern 2 (Abstand zwischen Bodenplatte 8 und Abdeckplatte (11): | 10 cm |

| | |
|---|---|
| Volumen der Kammern 3: | 1000 cm³ |
| Durchmesser des Durchgangs-lochs 7 (Resonatorloch): | 2 cm |
| Breite D der Schalldämpfer-Box: | 20 cm |
| Höhe H der Schalldämpfer-Box und gleichzeitig Querschnittshöhe des Strömungskanals 16: | 50 cm |
| Querschnittslänge L des Strömungskanals 16: | 100 cm |
| Abstand A zwischen den Schalldämpfer-Boxen: | 30 cm |
| Abstand A/2 zwischen einer Schalldämpfer-Box und der benachbarten Wand des Strömungskanals 16: | 15 cm |

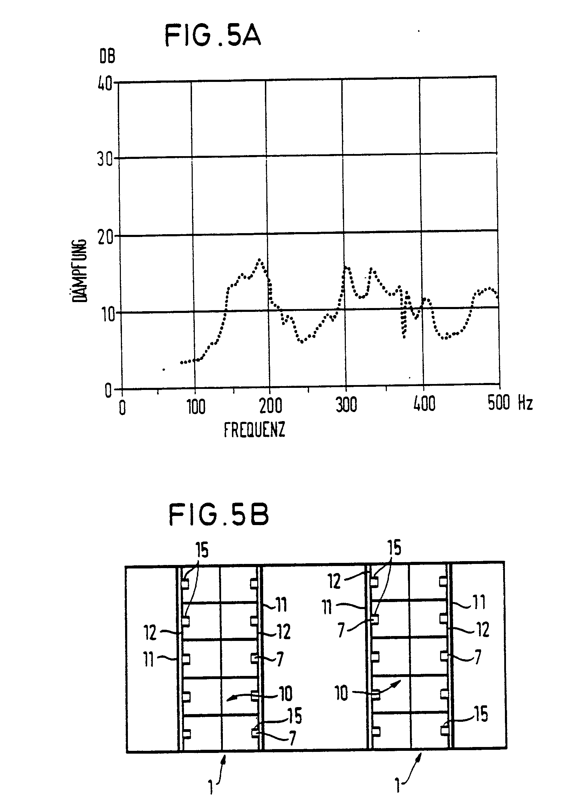

Die Figur 5A zeigt, daß sich dann, wenn man vor jedes Resonator- bzw. Durchgangsloch 7 einen kleinen Hals 15 ansetzt und eine etwas dickere Abdeckplatte 11 einsetzt, zum Beispiel eine Verschiebung des Dämpfungsabfalls zu tieferen Frequenzen hin erreichen läßt, allerdings etwas auf Kosten der Dämpfung bei höheren Frequenzen. Die Daten der Schalldämpfer-Boxen und ihrer Anordnung in dem Strömungskanal 16 sind für die Figur 5B mit Ausnahme der Tatsache, daß die Abdeckplatte 11 hier aus 0,2 mm dickem Aluminiumblech bestand und ein Resonatorhals 15 mit einer Länge von 2 cm vorgesehen war, die gleichen wie für Figur 4B vorstehend angegeben.

Neben der Länge des Resonatorhalses 15 spielt auch der Abstand zwischen der Abdeckplatte 11 und der Lochplatte 12 eine wichtige Rolle bei der Abstimmung der Schalldämpfer-Box 1. So wurde zum Beispiel ermittelt, daß bei einem Abstand zwischen Abdeck- und Lochplatte von 12 mm ein sehr starkes Dämpfungsmaximum etwas oberhalb von 200 Hz auftrat, das in einem relativ engen Frequenzband weit oberhalb der Dämpfungswerte liegt, die der Figur 5A zu entnehmen sind. Durch in die Kammern 2 hineinragende Resonatorhälse 15 läßt sich das Maximum zwar zu niedrigeren Frequenzen verschieben, jedoch nimmt dann bei Beibehaltung aller übrigen Parameter allerdings auch die Höhe des Maximums ab. Diese Höhe reicht aber immer noch aus, um bei den tiefen Frequenzen die Wirksamkeit eines herkömmlichen porösen Absorbers weit zu übertreffen. Will man zum Beispiel einen bei 200 Hz im Gebläsespektrum dominierenden "Schaufelton" dämpfen, der sich aus der Drehzahl und der Schaufelzahl des verwendeten Gebläses ergibt, so würde sich eine solche Schalldämpfer-Box als unmittelbar hinter dem Gebläse zu installierender Schalldämpfer anbieten. Aber auch ohne eine derart auf die Geräuschquelle abgestimmte Auslegung lassen sich Schalldämpfer nach der hier vorgeschlagenen neuartigen Bauart entwerfen, die zumindest im außerordentlich wichtigen Frequenzbereich bis 500 Hz bei gleicher Bautiefe allen marktgängigen Schalldämpfer-Bauarten eindeutig überlegen sind.

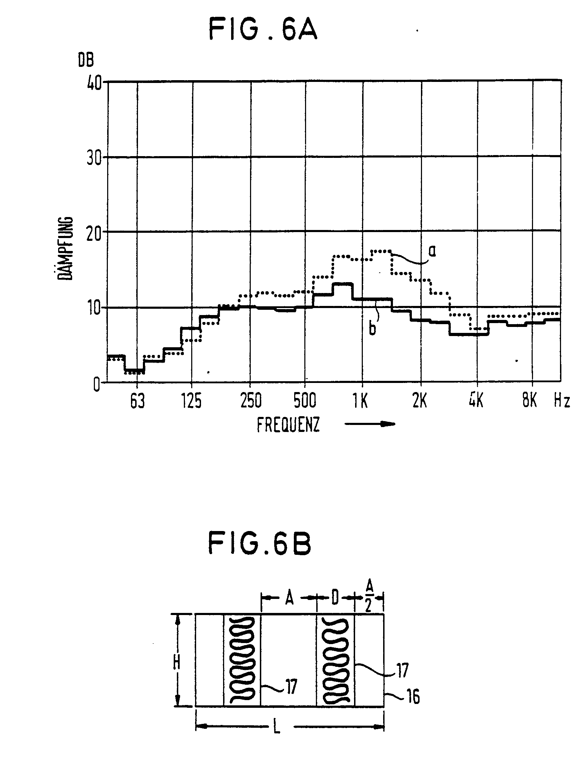

Zum Vergleich wurden Messungen an herkömmlichen porösen Schalldämpfern ausgeführt, deren Ergebnisse in Figur 6A wiedergegeben sind und die aufgrund einer Schalldämpfer-Anordnung ausgeführt wurden, welche in Figur 6B wiedergegeben ist. Die Abmessungen des Strömungskanals 16 sowie die Außenabmessungen der beiden in Figur 6B eingezeichneten herkömmlichen porösen Schallabsorber 17 und deren Abstände sind die gleichen, wie sie weiter oben in Verbindung mit der Figur 4B angegeben sind, so daß auf diese Weise ein direkter und genauer Vergleich zwischen der Wirksamkeit der hier vorgeschlagenen Schalldämpfer-Boxen und der herkömmlichen porösen Schallabsorber aufgrund der Kurven der Figuren 4A und 5A einerseits und der Figur 6A andererseits möglich ist:

Die punktierte Kurve a in Figur 6A ist die Schallabsorptionskurve eines handelsüblichen Kulissen-Schalldämpfers, der mit Mineralwolle mit einem Raumgewicht von etwa 40 kg/m³ vollgestopft war. Die Absorptionsfähigkeit ist in dem wichtigen Bereich zwischen 100 und 500 Hz bei dem herkömmlichen porösen Schallabsorber deutlich schlechter als bei den vorgeschlagenen Schalldämpfer-Boxen gemäß Ausbildung und Anordnung entsprechend Figur 4B und 5B, wie ein Vergleich der Kurve a der Figur 6A mit den Kurven der Figur 4A und 5A zeigt.

Es ist jedoch zu beachten, daß nach den Ausführungen weiter oben, in der Beschreibungseinleitung Schalldämpfer dieser Bauart oft nicht ohne weiteres einsetzbar sind. Um zum Beispiel das Eindringen von Feuchtigkeit in die Mineralwolle zu verhindern, ist es unbedingt notwendig, die Mineralwollefüllung in einem Sack aus Kunststoffolie von 50 bis 500 μm Dicke einzuschweißen. Dadurch wird aber die Absorptionsfähigkeit merklich verschlechtert; so kann zum Beispiel in der Oktave zwischen 500 und 1000 Hz die Absorptionsfähigkeit (Dämpfung) auf die Hälfte sinken. Will man die Folie gegen Verletzungen schützen, damit der Inhalt des Foliensacks u.a. nicht zu einer Brutstätte für Bakterien wird, dann muß man für eine Abdeckung der Gesamtkulissenfläche zum Beispiel durch ein Lochblech sorgen. Wenn hierbei der Lochflächenanteil mindestens 30% beträgt, dann weiß man zwar, daß eine solche Abdeckung akustisch praktisch ohne Einfluß ist, es besteht dann jedoch die Gefahr, daß die Folie nicht schlaff bleibt, sondern je nach Art der Füllung mehr oder weniger stark gegen die Abdeckung gedrückt und dadurch gespannt wird. Dies wirkt sich, wie durch Messungen ermittelt wurde, für mittlere und tiefe Frequenzen sehr negativ aus. Selbst wenn man die Folie ganz schlaff zwischen zwei Lochblechen halten würde, könnte man die ursprünglichen Dämpfungswerte eines herkömmlichen porösen Absorbers bei mittleren Frequenzen nicht halten. Abgesehen hiervon verbietet sich bei chemischer Beanspruchung der Einsatz von Kunststoffolien überhaupt.

Um bei starker mechanischer Beanspruchung durch die anliegende Strömung oder Erschütterungen Lageveränderungen des porösen Materials in einem solchen herkömmlichen porösen Schallabsorber 17 zu vermeiden, muß die Kulisse unter Umständen durch Kassettierungen unterteilt werden. Diese Kassettierungen bewirken aber eine weitere Verschlechterung der bei tiefen Frequenzen ohnehin nicht sehr großen Dämpfung.

Selbst wenn man keine weiteren Anforderungen, wie sie oben im Rahmen der Aufgabenstellung genannt worden sind, stellen würde, zeigt es sich, daß die herkömmlichen porösen Schallabsorber offenbar wenig für eine risikofreie Auslegung von Schalldämpfern bei 250 Hz und/oder geringeren Frequenzen geeignet sind.

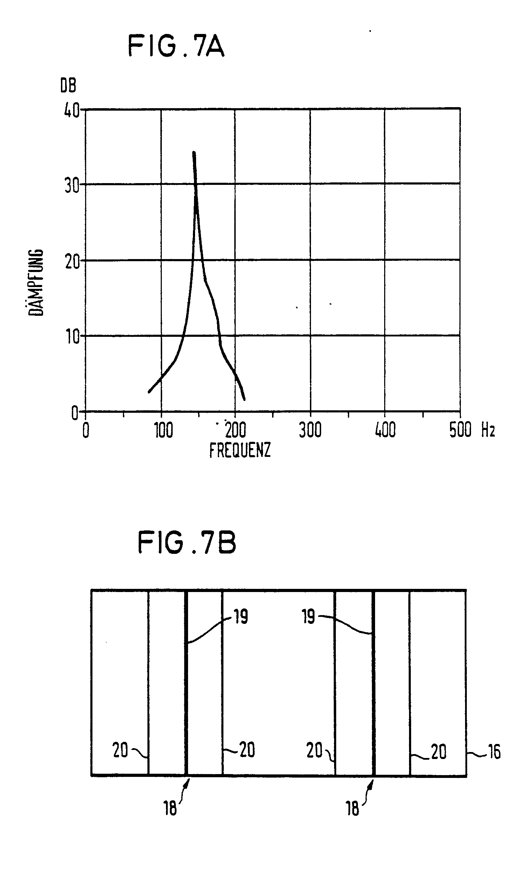

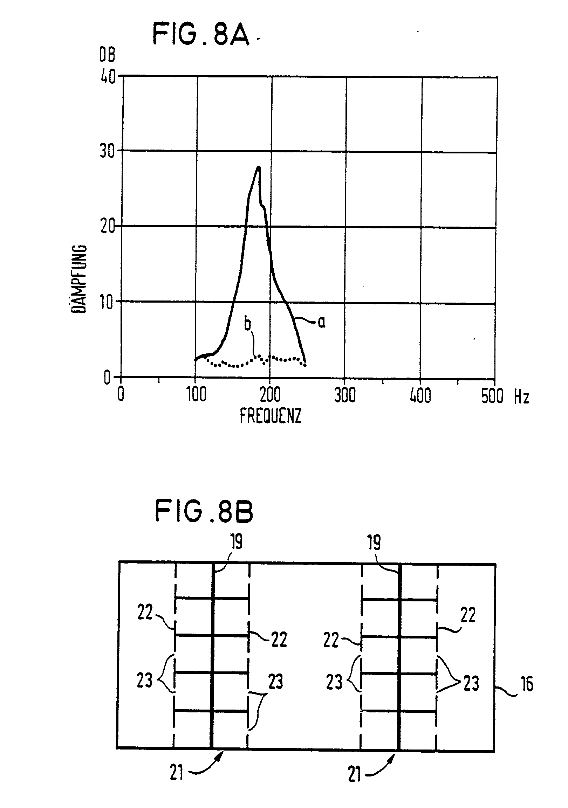

Vergleichsversuche mit Plattenresonatoren, deren Ergebnis in Figur 7A wiedergegeben ist, und mit Helmholtzresonatoren, die zu Ergebnissen geführt haben, wie sie in Figur 8A dargestellt sind, zeigen, daß die Wirkungsweise der hier vorgeschlagenen Schalldämpfer-Box in keiner Weise lediglich additiv aus der Wirkungsweise des Plattenresonators und der Wirkungsweise des Helmholtzresonators resultiert, sondern vielmehr in synergistischer Weise weit über die addierten Wirkungen von Platten- und Helmholtzresonatoren hinausgeht:

Bevor auf die Figuren 7A und 7B sowie 8A und 8B im einzelnen eingegangen wird, sei darauf hingewiesen, daß die Abmessungen des Strömungskanals 16 und die äußeren Abmessungen der Plattenresonatoren bzw. Helmholtzresonatoren gemäß den Figuren 7B und 8B sowie die Abstände zwischen diesen Resonatoren untereinander und zur benachbarten Wand des Strömungskanals 16 hin die gleichen sind, wie im Zusammenhang mit Figur 4B weiter oben angegeben, wobei die Symbole für diese Abmessungen bzw. Abstände A, A/2, D, H und L aus Gründen einer vereinfachten Darstellung in den Figuren 7B und 8B nicht eingetragen worden sind, da sie sich aus einem Vergleich mit der Figur 4B ohne wieteres ersehen lassen.

Die Plattenabsorber 18 gemäß Figur 7B bestanden, abgesehen von dem nicht dargestellten Kulissen-Rahmen aus einer Mittelplatte 19, die eine 13 mm dicke Holzspanplatte war, und aus beidseitig 10 cm davor angeordneten Resonanzplatten 20, die vorliegend aus 0,6 mm dickem Aluminiumblech bestanden. Wie die Figur 7A zeigt, ist ein derart aufgebauter Plattenresonator nur in einem sehr engen Frequenzband wirksam, das etwa beiderseits von einer Resonanzfrequenz von 147 Hz liegt.

Die Helmholtzresonatoren 21, die gemäß Figur 8B zur Messung der Kurven gemäß Figur 8A verwendet wurden, besaßen als Mittelplatte 19 ebenfalls eine 13 mm dicke Preßspanplatte sowie eine Lochplatte 22, die aus 0,6 mm dickem Aluminiumblech bestand und Resonatorlöcher 23 mit einem Durchmesser von 1 cm aufwies; die Tiefe der einzelnen Kammern, also der Abstand zwischen der Lochplatte 22 und der Mittelplatte 19 betrug 10 cm und das Volumen der einzelnen Kammern betrug 1000 cm³, und schließlich betrug die korrigierte Dicke der Lochplatte 22 im Bereich der Resonatorlöcher 23 0,8 cm. Diese korrigierte Dicke, die auch mit 1* bezeichnet und in Verbindung mit Figur 9 erläutert wird, berücksichtigt den Strömungseinfluß in der unmittelbaren Nachbarschaft des Resonatorlochs, d.h. die außerhalb des Resonatorlochs je nach Resonatorlochgeometrie etwas unterschiedlich mitschwingende Luft- bzw. Gasmasse.

Wie die Kurve a der Figur 8A zeigt, die aufgrund der Anordnung nach Figur 8B mit offenen Resonatorlöchern 23 gemessen wurde, ergibt sich ein typischer schmalbandiger Dämpfungscharakter. Das Maximum der Dämpfung liegt bei 170 Hz. Wenn man die Resonatorlöcher 23 überklebt, dann erhält man die Kurve b der Figur 8A, so daß sich nur eine sehr geringe Dämpfung ergibt und das gesamte Maximum der Kurve a verschwindet.

Es sei hier der Vollständigkeit halber darauf hingewiesen, daß derartige Helmholtzresonatoren, wie sie in Figur 8B dargestellt sind, vor allem den Nachteil haben, daß sie offene Hohlräume besitzen, was zur Folge hat, daß sie verschmutzen und durch die Strömung zu Eigengeräuschen angeregt werden.

Wenn auch zu berücksichtigen ist, daß die Resonanzplatten 20 der Anordnung nach Figur 7B und die Lochplatten 22 der Anordnung nach Figur 8B eine größere Dicke als die Abdeckplatten 11 und die Lochplatten 12 der Anordnungen nach den Figuren 4B und 5B hatten, läßt sich doch grundsätzlich durch einen Vergleich der Kurven gemäß den Figuren 4A und 5A einerseits mit den Kurven der Figuren 7A und 8A andererseits deutlich erkennen, daß sich durch die hier vorgeschlagene neuartige Schalldämpfer-Box ein völlig unerwarteter sehr breitbandiger und sowohl bei ganz tiefen als auch bei höheren Frequenzen sehr gut dampfender Schallabsorber ergibt, wie er aus einer bloßen Addition der Kurven der Figuren 7A und 8A überhaupt nicht zu erklären und daher auch in keiner Weise zu erwarten war:

Im Hinblick auf die Kurve b der Figur 8A und im Hinblick auf strömungsmechanische Überlegungen, die man hier anstellen würde, wäre zu erwarten gewesen, daß eine Abdeckung der Resonator- bzw. Durchgangslöcher 7 der Lochfolie 12 durch eine Abdeckfolie 11, wie sie in der hier vorgeschlagenen neuartigen Schalldämpfer-Box erfolgt, dazu führen würde, daß die Luftschwingungen im Resonator- bzw. Durchgangsloch 7 völlig unterbunden werden; würde man dagegen eine in größerem Abstand angebrachte Folie zu Abdeckung verwenden, so wäre zu erwarten, daß diese, damit sie den Schall ungehindert an den Helmholtzresonator heranläßt, sehr dünn sein müßte, nämlich eine Dicke von ca. 6 bis 10 μm haben müßte, was sich in der Praxis wegen viel zu großer Empfindlichkeit einer solchen Folie gegen Beschädigung verbieten würde.

Die vorliegende Erfindung beruht auf der überraschenden Feststellung, daß eine unmittelbar über die Lochplatte 12 eines Helmholtzresonators (siehe Figur 9) gespannte Abdeckplatte 11 nicht die Schwingungen und die damit verbundenen Hin- und Herströmungen 24 in dem Durchgangs- bzw. Resonatorloch 7 der Lochplatte 12 unterbindet, sondern vielmehr zu einer Zwangskopplung zwischen Schwingungen des Helmholtzresonators und der Abdeckplatte 11 führt, wobei es zu Luftströmungen 25 kommt, die im wesentlichen parallel zur Abdeck- und Lochplatte 11 bzw. 12 verlaufen. Diese Kopplung bewirkt, daß die Abdeckplatte 11 und die Lochplatte 12, die zu Schwingungen im Hörfrequenzbereich anregbar ist, in der Nähe des Durchgangs- bzw. Resonanzlochs 7 zu einer Vielzahl von Schwingungen im Hörfrequenzbereich zwangsweise angeregt werden, aufgrund deren sich das breite Frequenzspektrum der wirksamen Dämpfung gemäß den Figuren 4A und 5A ergibt.

Da sich die effektive Länge 1* des Durchgangs- bzw. Resonatorlochs 7, aufgrund deren die Resonanz eines Helmholtzresonators errechnet wird, additiv aus der tatsächlichen Länge 1 und den Größen $\Delta 1_i$ und $\Delta 1_a$ zusammensetzt, wobei die letzteren beiden Werte Endkorrekturen sind, welche die außerhalb des Durchgangs- bzw. Resonatorlochs 7 je nach Lochgeometrie etwas unterschiedlich mitschwingende Luftmasse symbolisieren, sollte der Abstand S zwischen der Abdeckplatte 11 und der Lochplatte 12 bei der erfindungsgemäßen Schalldämpfer-Box vorzugsweise kleiner oder gleich dem Wert $\Delta 1_a$ sein, da dann eine besonders starke Ankopplung zwischen den Schwingungen der Abdeckplatte 11 und der Lochplatte 12 erzielt wird. Aus ähnlichen Überlegungen heraus sollte bevorzugt der Abstand S kleiner oder gleich der Größe des Durchmessers des Durchgangs- bzw. Resonatorlochs 7 sein, wobei dieser Durchmesser im Falle eines schlitzförmigen Durchgangs- bzw. Resonatorlochs 7 gleich der Schlitzbreite ist. Schließlich wird in einer anderen bevorzugten Ausführungsform der erfindungsgemäßen Schalldämpfer-Box der Abstand S so gewählt, daß er kleiner oder gleich einem Viertel der Tiefe der Kammer 2 also des Abstandes zwischen Abdeckplatte 11 und Bodenplatte 8 ist.

Es gehört also zu den wichtigsten und überraschenden Ergebnissen der Untersuchungen, die zur vorliegenden Erfindung geführt haben, daß eine unmittelbar vor dem Durchgangsloch der Lochplatte angebrachte, nicht zu dicke Abdeckplatte, die Luftpulsationen der in der Kammer enthaltenen Luft durch das Durchgangsloch nicht behindert, sondern vielmehr zu einer synergistischen wesentlichen Steigerung des Frequenzumfangs und des integralen Werts der Schalldämpfung führt.

Die mit der Erfindung zur Verfügung gestellte Schalldämpfer-Box hat in ihrer Grundausführung und/oder in bevorzugten Ausführungsformen insbesondere folgende Vorteile:

(1) Jede Schalldämpfer-Box ist gegenüber einem äußeren Strömungsmittel rundum abgeschlossen, indem sie eine äußere Schale aufweist, die das Eindringen von gasförmigen, flüssigen oder festen Stoffen aus dem Strömungsmittel völlig unmöglich macht.

(2) Die parallel zum Strömungsmittelfluß und der hauptsächlichen Schallausbreitungsrichtung angeordneten Außenflächen setzen der Strömung durch eine ganz ebene und glatte, vorzugsweise metallische, Oberfläche den geringstmöglichen Reibungswiderstand entgegen.

(3) Die Außenhaut der Schalldämpfer-Box ist gegen chemische und mechanische Verletzung geschützt.

(4) Unmittelbar hinter der äußeren Abdeckplatte ist eine ebenfalls ebene Lochplatte so angeordnet, daß insbesondere in der Nähe der Löcher der Lochplatte ein enger Spalt bleibt, die beiden Platten also allenfalls stellenweise in Verbindung stehen.

(5) Beide Platten, nämlich Lochplatte und die Abdeckplatte sind vorzugsweise von größenordnungsmäßig gleicher Dicke, bevorzugt kleiner als die Dicke des Luftspalts zwischen ihnen ist.

(6) Die innenliegende Lochplatte ist so auf einer, beispielsweise wabenförmigen, Skelettstruktur befestigt, welche nichtschwingungsfähig, also akustisch starr ist, daß in sich abgeschlossene, nur durch ein Durchgangsloch zum Zwischenraum zwischen der Abdeckplatte und der Lochplatte hin geöffnete Kammern als Hohlräume entstehen.

(7) Die Abdeckplatte und die Lochplatte werden jede für sich oder auch beide zusammen mit dem durch die Hohlräume gebildeten Luftkissen durch Schallwellen in den zwischen den parallel angeordneten Schalldämpfer-Boxen gebildeten Kanälen zu Schwingungen angeregt.

(8) Die Luftpfropfen in den Durchgangslöchern führen zusammen mit der in der Nähe der Durchgangslöcher im Zwischenraum bzw. Spalt zwischen der Abdeckplatte und Lochplatte eng eingeschlossenen Luft unter Mitnahme bzw. Ankopplung auch eines Teils der Abdeckplatte mit dem Luftkissen in den Hohlräumen Schwingungen aus.

(9) Der Frequenzbereich der verschiedenen Schwingungsformen liegt vorzugsweise im Bereich unter 500 Hz, ganz vorzugsweise zwischen 100 und 500 Hz.

(10) Der Frequenzbereich der Dämpfung ist durch Wahl der geometrischen Parameter und der Materialparameter in beiden Bereichen auf verschiedenste Geräuschspektren einstellbar.

(11) Die Abdeckplatte kann längs der Skelett- bzw. Wabenstruktur befestigt, zum Beispiel geklebt, sein, insbesondere kann sie Noppen mit Klebestellen aufweisen.

(12) Die Schalldämpfer-Box eignet sich für praktisch alle Aufgaben der Schalldämpfung in Strömungskanälen. Sie gewährleistet einen optimale Dämpfung des Schalls der für das Erzeugen der Strömung in diesen Strömungskanälen verwendeten Fördereinrichtungen.

Die Schalldämpfer-Box macht sich unter anderem folgende bisher nicht genützte Resonanz- und Dämpfungsmechanismen zunutze:

(a) Schwingungen der ebenen Abdeckplatte zusammen mit einer unmittelbar hinter derselben angebrachten Lochplatte von in der Größenordnung vergleichbarer Wandstärke,

(b) Schwingungen des Luftpfropfens in den Lochhälsen der Lochplatte zusammen mit der Abdeckplatte bzw. Teilen derselben,

(c) Schwingungen der beiden Platten bzw. von Teilen derselben relativ zueinander,

(d) Pulsationen der zwischen den beiden Platten, insbesondere der in der Nähe der Löcher, gebildeten Luftkissen.

Die erwünschte Breitbandigkeit läßt sich durch eine gewisse Variationsbreite der geometrischen Parameter im Inneren der Schalldämpfer-Box erzielen. Besonders sei hier die Formgebung der Löcher und eventuell angesetzten Hälse als leicht handhabbares Mittel zur Optimierung und Anpassung der Wirksamkeit der Box hervorgehoben. Außerdem bietet die Anordnung der Lochplatten und Abdeckplatten zueinander und die Art, wie sie stellenweise miteinander in Kontakt stehen oder miteinander verbunden, sind, Möglichkeiten, den Schallabsorber breitbandig zu machen.

Will man eine extrem leichte Schalldämpfer-Box bauen, so kann man die Skelett-Wände sowie Loch- und Abdeckplatten auch mit erheblich geringerer Wandstärke bauen. Allerdings verschiebt sich dann ein Teil ihrer Wirksamkeit zu höheren Frequenzen. Da die ebene Skelett-Bodenplatte 8 in der Symmetrieebene der Box unter den normalerweise in Kanälen vorherrschenden Anregungsbedingungen akustisch nicht wirksam wird, kann man diese unter Umständen einsparen.

Die Schalldämpfer-Box kommt im Gegensatz zu allen bekannt gewordenen Absorber-Kulissen, -Kassetten und -Balken sowie Unterdecken-Konstruktionen ganz ohne faserige oder poröse Materialien aus. Da die innere Dämpfung in den dünnen Platten und den großen Luftkammern sehr gering ist, ist die Schalldämpfer-Box so ausgelegt, daß die Verluste durch künstlich erhöhte Wand- und Grenzschichtreibungs-Mechanismen zustande kommen. Das schließt natürlich aber nicht aus, daß man—wo dies akustisch sinnvoll und technisch realisierbar ist—die an sich bekannten Maßnahmen zur Bedämpfung der Hohlräume der Helmholtzresonatoren und zur Bedämpfung der Plattenschwingungen zusätzlich einsetzt.

**Patentansprüche**

1. Schalldämpfer-Box, insbesondere zur Dämpfung der sich in Strömungsmittelförderkanälen, wie beispielsweise Lüftungskanälen, im Strömungsmittel ausbreitenden Schallwellen, umfassend:

(A) wenigstens eine in sich abgeschlossene, einen Hohlraum bildende Kammer (2), die auf einer Seite durch eine Außenplatte (3, 11) begrenzt ist, und

(B) wenigstens eine Innenplatte (4, 12), die im wesentlichen parallel zu der Außenplatte (3, 11) im Hohlraum der Kammer (2) angeordnet ist und diesen in zwei Teilhohlräume (5, 6) unterteilt, die nur durch ein in der Innenplatte (4, 12) vorgesehenes Durchgangsloch (7) miteinander verbunden sind, dadurch gekennzeichnet, daß

(a) die gelochte Innenplatte (4, 12) hinsichtlich Material, Dicke und Abmessungen so ausgelegt ist, daß sie wie bei einem Platten-Resonator als Masse zusammen mit den Teilhohlräumen (5, 6) als Feder im Hörfrequenzbereich durch Luftschall anregbar ist;

(b) die Außenplatte (3, 11) impermeabel und hinsichtlich Material, Dicke und Abmessungen so ausgelegt ist, daß sie wie bei einem Platten-Resonator als Masse zusammen mit den Teilhohlräumen (5, 6) als Feder im Hörfrequenzbereich durch Luftschall anregbar ist;

(c) die Luft in dem Durchgangsloch (7) der Innenplatte (4, 12) ähnlich wie bei einem Helmholtz-Resonator als Masse zusammen mit den Teilhohlräumen (5, 6) als Feder im Hörfrequenzbereich durch Luftschall anregbar ist; und

(d) der Abstand (S) zwischen der Innenplatte (4, 12) und der Außenplatte (3, 11) so bemessen ist, daß die unter (a), (b) und (c) angegebenen Schwingungen miteinander zwangsgekoppelt sind, so daß diese ein zusammenhängendes Schwingungssystem mit breitbandiger Wirkung bilden.

2. Schalldämpfer-Box nach Anspruch 1 mit einer Mehrzahl von nebeneinander angeordneten Kammern, dadurch gekennzeichnet, daß die Außenplatten (3) mehrerer seitlich benachbarter Kammern (2), vorzugsweise aller seitlich benachbarten Kammern (2), von einer gemeinsamen, bevorzugt einstückigen, Abdeckplatte (11) gebildet sind.

3. Schalldämpfer-Box nach Anspruch 1 mit einer Mehrzahl von nebeneinander angeordneten Kammern, dadurch gekennzeichnet, daß die Innenplatten (4) mehrerer seitlich benachbarter Kammern (2), vorzugsweise aller seitlich benachbarten Kammern (2), von einer gemeinsamen, bevorzugt einstückigen, Lochplatte (12) gebildet sind.

4. Schalldämpfer-Box nach Anspruch 1, 2 oder 3, dadurch gekennzeichnet, daß seitlich benachbarte Kammern (2) gemeinsame Seitenwände (9) aufweisen.

5. Schalldämpfer-Box nach Anspruch 2, 3 oder 4, dadurch gekennzeichnet, daß zwei Anordnungen aus je einer Mehrzahl von nebeneinanderliegenden Kammern (2) zu einer Doppelschichtanordnung zusammengefaßt sind, in der die Kammern (2) der beiden Anordnungen von nebeneinanderliegenden Kammern (2) auf ihren Rückseiten miteinander verbunden sind.

6. Schalldämpfer-Box nach Anspruch 5, dadurch gekennzeichnet, daß die Kammern (2), deren Rückseiten einander benachbart sind, jeweils einen gemeinsamen Kammerboden (8) haben.

7. Schalldämpfer-Box nach Anspruch 4, dadurch gekennzeichnet, daß die gemeinsamen Seitenwände (9) von einer, vorzugsweise wabenförmigen, Skelettstruktur (10) gebildet sind.

8. Schalldämpfer-Box nach Anspruch 6 und 7, dadurch gekennzeichnet, daß auch die gemeinsamen Kammerböden (8) von der, vorzugsweise wabenförmigen, Skelettstruktur (10) gebildet sind.

9. Schalldämpfer-Box nach einem der Ansprüche 2 bis 8, dadurch gekennzeichnet, daß die Mehrzahl von Kammern (2) von einem gemeinsamen Kulissenrahmen (13) eingefaßt und durch diesen sowie die Abdeckplatte oder -platten (11) strömungsmitteldicht gegenüber der Umgebung abgeschlossen ist.

10. Schalldämpfer-Box nach einem der Ansprüche 2 bis 9, dadurch gekennzeichnet, daß die Außenplatte (3) bzw. die Abdeckplatte (11) eine völlig ebene und glatte, sowie vorzugsweise metallische, Außenoberfläche hat.

11. Schalldämpfer-Box nach einem der Ansprüche 1 bis 10, dadurch gekennzeichnet, daß alle genannten Teile (3, 4, 8, 9, 10, 11, 12, 13, 14, 15) der Schalldämpfer-Box (1) aus dem gleichen Material, insbesondere einem Kunststoff oder Metall, vorzugsweise Aluminium oder einer Aluminiumlegierung, bestehen.

12. Schalldämpfer-Box nach einem der Ansprüche 1 bis 11, dadurch gekennzeichnet, daß die Dicke der Außenplatten (3) bzw. der Abdeckplatte (11) und der Innenplatten (4) bzw. der Lochplatte (12) größenordnungsmäßig gleich und vorzugsweise kleiner als der Abstand zwischen der Außenplatte (3) bzw. der Abdeckplatte (11) einerseits und der Innenplatte (14) bzw. der Lochplatte (12) andererseits ist.

13. Schalldämpfer-Box nach einem der Ansprüche 1 bis 12, dadurch gekennzeichnet, daß das Durchgangsloch (7) einen von der Außenplatte (3) bzw. der Abdeckplatte (11) weggerichteten Hals (15) aufweist, der einen Strömungskanal bildet.

14. Schalldämpfer-Box nach einem der Ansprüche 1 bis 13, dadurch gekennzeichnet, daß die Außen- bzw. Abdeckplatte (3, 11) und/oder die Innen- bzw. Lochplatte (4, 12) eine Kunststoff- oder Metallplatte, insbesondere eine Aluminium- oder Aluminiumlegierungsplatte mit einer Dicke im Bereich von 0,03 bis 0,6 mm, vorzugsweise von 0,05 bis 0,3 mm ist.

**Revendications**

1. Boîte antibruit, en particulier pour l'amortissement des ondes sonores se propageant dans le fluide d'écoulement de canaux d'acheminement de fluides d'écoulement, comme par exemple des canalisations d'aération, comprenant:

(A) au moins une chambre (2) autonome, formant un espace creux, qui est délimitée sur un côté par une plaque extérieure (3, 11), et

(B) au moins une plaque intérieure (4, 12) qui est disposée de manière essentiellement parallèle à la plaque extérieure (3, 11) dans l'espace creux de la chambre (2) et divise celui-ci en espaces creux partiels (5, 6) qui ne sont reliés entre eux que par un trou de passage (7) prévu dans la plaque intérieure (4, 12), caractérisée en ce que

(a) la plaque intérieure (4, 12) perforée est étudiée de manière telle, en ce qui concerne son matériau, son épaisseur et ses dimensions, qu'elle peut, comme dans le cas d'un résonateur à plaques, en tant que masse conjointement avec les espaces creux partiels (5, 6), être stimulée en tant que ressort dans la zone de fréquence acoustique par le bruit transmis par l'air;

(b) la plaque extérieure (3, 11) est imperméable et étudiée de manière telle, en ce qui concerne son matériau, son épaisseur et ses dimensions, qu'elle peut, comme dans le cas d'un résonateur à plaques, en tant que masse conjointement avec les espaces creux partiels (5, 6), être stimulée en tant que ressort dans la zone de fréquence acoustique par le bruit transmis par l'air;

(c) l'air situé dans le trou de passage (7) de la plaque intérieure (4, 12) peut, de manière analogue à un résonateur de Helmholtz, en tant que masse conjointement avec les espaces creux partiels (5, 6), être stimulé en tant que ressort dans la zone de fréquence acoustique par le bruit transmis par l'air; et

(d) l'espace (S) entre la plaque intérieure (4, 12) et la plaque extérieure (3, 11) est dimensionné de manière telle que les vibrations, désignées par (a), (b) et (c), sont couplées de manière forcée, de sorte que celles-ci forment un système de vibrations avec un effet à large bande.

2. Boîte antibruit selon la revendication 1, comportant une pluralité de chambres disposées les unes à côté des autres, caractérisée en ce que les plaques extérieures (3) de plusieurs chambres (2) latéralement voisines, de préférence de toues les chambres (2) latéralement voisines, sont formées par une plaque de recouvrement (11) commune, réalisée de préférence en un seul élément.

3. Boîte antibruit selon la revendication 1, comportant une pluralité de chambres disposées les unes à côté des autres, caractérisée en ce que les plaques intérieures (4) de plusieurs chambres (2) latéralement voisines, de préférence de toutes les chambres (2) latéralement voisines, sont formées par une plaque perforée (12) commune, réalisée de préférence en un seul élément.

12

4. Boîte antibruit selon la revendication 1, 2 ou 3, caractérisée en ce que des chambres (2) latéralement voisines présentent des parois latérales (9) communes.

5. Boîte antibruit selon la revendication 2, 3 ou 4, caractérisée en ce que deux structures, formées respectivement d'une pluralité de chambres (2) situées côte à côte, sont réunies en une structure à double couche, dans laquelle les chambres (2) des deux structures sont reliées entre elles par leur face arrière par des chambres (2) situées côte à côte.

6. Boîte antibruit selon la revendication 5, caractérisée en ce que les chambres (2), dont les faces arrière sont voisines, ont à chaque fois un fond de chambre (8) commun.

7. Boîte antibruit selon la revendication 4, caractérisée en ce que les parois latérales (9) communes sont formées par une structure squelettique (10), de préférence alvéolaire.

8. Boîte antibruit selon la revendication 6 ou 7, caractérisée en ce que les fonds de chambre (8) communs sont eux aussi formés par la structure squelettique (10), de préférence alvéolaire.

9. Boîte antibruit selon l'une des revendications 2 à 8, caractérisée en ce que la pluralité de chambres (2) est encastrée dans un cadre à coulisse (13) commun et sont isolées du milieu environnant, de manière étanche au fluide d'écoulement, par ledit cadre (13) ainsi que par la plaque ou les plaques de recouvrement (11).

10. Boîte antibruit selon l'une des revendications 2 à 9, caractérisée en ce que la plaque extérieure (3) et la plaque de recouvrement (11) présentent une surface externe entièrement plane et lisse et, de préférence, métallique.

11. Boîte antibruit selon l'une des revendications 1 à 10, caractérisée en ce que tous les éléments cités (3, 4, 8, 9, 10, 11, 12, 13, 14, 15) de la boîte antibruit (1) sont constitués du même matériau, en particulier en matière plastique ou en métal, de préférence en aluminium ou en alliage d'aluminium.

12. Boîte antibruit selon l'une des revendications 1 à 11, caractérisée en ce que l'épaisseur des plaques extérieures (3) ou de la plaque de recouvrement (11) et des plaques intérieures (4) ou de la plaque perforée (12) est d'un même ordre de grandeur et, de préférence, plus petite que la distance située entre la plaque extérieure (3) ou la plaque de recouvrement (11), d'une part, et la plaque intérieure (4) ou la plaque perforée (12), d'autre part.

13. Boîte antibruit selon l'une des revendications 1 à 12, caractérisée en ce que le trou de passage (7) présente une gorge (15) dirigée à l'opposé de la plaque extérieure (3) ou de la plaque de recouvrement (11) et forme un canal d'écoulement.

14. Boîte antibruit selon l'une des revendications 1 à 13, caractérisée en ce que la plaque extérieure ou de recouvrement (3, 11) et/ou la plaque intérieure ou perforée (4, 12) sont respectivement une plaque en matière plastique ou une plaque métallique, en particulier une plaque d'aluminium ou d'alliage d'aluminium, d'une épaisseur comprise dans une plage allant de 0,03 à 0,6 mm, de préférence de 0,05 à 0,3 mm.

## Claims

1. A sound-attenuating box, more particularly for attenuation of sound waves propagating in a medium conveyed in ducts such as air ducts, and comprising
   (A) at least one closed chamber (2) forming a cavity and bounded on one side by an outer plate (3, 11) and
   (B) at least one inner plate (4, 12) disposed substantially parallel to the outer plate (3, 11) in the cavity in the chamber (2) and dividing it into two compartments (5, 6) connected only by a hole (7) in the inner plate (4, 12), characterised in that
   (a) the perforated inner plate (4, 12), as regards material, thickness and dimensions, is designed so that, as in a plate resonator, it constitutes a mass which, in conjunction with the compartments (5, 6) acting as a spring, can be excited in the audible frequency range by airborne noise;
   (b) the outer plate (3, 11) is impermeable and, as regards material, thickness and dimensions, is designed so that, as in a plate resonator, it constitutes a mass which, together with the compartments (5, 6) acting as springs, can be excited in the audible frequency range by airborne noise;
   (c) the air in the hole (7) through the inner plate (4, 12), like the mass in a Helmholtz resonator, together with the compartments (5, 6) acting as a spring, can be excited in the audible frequency range by airborne noise, and
   (d) the distance (S) between the inner plate (4, 12) and the outer plate (3, 11) is dimensioned so that the vibrations as per (a), (b) and (c) are automatically coupled to form a continuous vibration system with wide-band action.

2. A sound-attenuating box according to claim 1 comprising a number of adjacent chambers, characterised in that the outer plates (3) of a number of laterally adjacent chambers (2), preferably of all the laterally adjacent chambers (2), are formed by a common, preferably one-piece, cover plate (11).

3. A sound-attenuating box according to claim 1 comprising a number of adjacent chambers, characterised in that the inner plates (4) of a number of laterally adjacent chambers (2), preferably of all the laterally adjacent chambers (2), are formed by a common, preferably one-piece, perforated plate (12).

4. A sound-attenuating box according to claim 1, 2 or 3, characterised in that laterally adjacent chambers (2) have common side walls (9).

5. A sound-attenuating box according to claim 2, 3 or 4, characterised in that two arrangements each of a number of adjacent chambers (2) are combined into a double-layer arrangement in which the chambers (2) in the two arrangements of adjacent chambers (2) are interconnected at the back.

6. A sound-attenuating box according to claim 5, characterised in that the chambers (2) connected at the back each have a common chamber base (8).

7. A sound-attenuating box according to claim 4, characterised in that the common side walls (9) are formed by a preferably honeycomb skeleton structure (10).

8. A sound-attenuating box according to claims 6 and 7, characterised in that the common chamber bases (8) are also formed by the preferably honeycomb skeleton structure (10).

9. A sound-attenuating box according to any of claims 2 to 8, characterised in that the number of chambers (2) are enclosed by a common sliding frame (13) which, in cooperation with the cover plate or plates (11), shuts them off from the environment so as to be sealed against the flow.

10. A sound-attenuating box according to any of claims 2 to 9, characterised in that the outer plate (3) and/or the cover plate (11) has a completely flat, smooth, preferably metal outer surface.

11. A sound-attenuating box according to any of claims 1 to 10, characterised in that all the aforementioned parts (3, 4, 8, 9, 10, 11, 12, 13, 14, 15) of the sound-attenuating box (1) are made of the same material, more particularly a plastics or metal, preferably aluminium or an aluminium alloy.

12. A sound-attenuating box according to any of claims 1 to 11, characterised in that the thickness of the outer plates (3) or of the cover plate (11) and the inner plates (4) or the perforated plate (12) is of comparable value and preferably less than the distance between the outer plate (3) and/or the cover plate (11) on the one hand and the inner plate (14) and/or the perforated plate (12) on the other hand.

13. A sound-attenuating box according to any of claims 1 to 12, characterised in that the through hole (7) has a neck (15) extending away from the outer plate (3) or the cover plate (11) and constituting a flow duct.

14. A sound-attenuating box according to any of claims 1 to 13, characterised in that the outer or cover plate (3, 11) and/or the inner or perforated plate (4, 12) is a plastics or metal plate, more particularly an aluminium or aluminium-alloy plate having a thickness in the range from 0.03 to 0.6 mm, preferably 0.05 to 0.3 mm.

FIG.1

FIG.1A

FIG.2

FIG.3

EP 0 213 163 B1

# FIG.1B

EP 0 213 163 B1

FIG.1C

FIG.1D

# FIG.4A

# FIG.4B

# FIG.5A

DB

# FIG.5B

# FIG.6A

# FIG.6B

7

## FIG. 7A

## FIG. 7B

## FIG. 8A

## FIG. 8B

# FIG.9